# EUROPEAN PATENT SPECIFICATION

(11) **EP 3 263 437 B1**
(45) Date of publication and mention of the grant of the patent: **03.06.2020**
(21) Application number: 17156610.2
(22) Date of filing: 17.02.2017
(51) Int. Cl.: B62M 6/50, G01L 1/22, G01L 3/14

(54) **STRAIN GAUGE SENSOR APPARATUS AND ASSOCIATED INSTALLATION METHOD**
DEHNUNGSMESSSTREIFENSENSORVORRICHTUNG UND ENTSPRECHENDES INSTALLATIONSVERFAHREN
DISPOSITIF DE DÉTECTION À BASE DE JAUGES DE CONTRAINTE ET PROCÉDÉ D'INSTALLATION CORRESPONDANT

(30) Priority: 28.06.2016 TW 105120275; 17.11.2016 US 201615353890
(43) Date of publication of application: 03.01.2018
(73) Proprietor: Taiwan Hodaka Industrial Co., Ltd., Taipei (TW); Su Tai Inc., Hualien City, Hualien County 970 (TW)
(72) Inventor: Jenn, Paul, Tainan City (TW)
(74) Representative: Cabinet Chaillot

(56) References cited:
- CN-A- 102 190 059
- JP-A- 2000 272 574

## Description

### BACKGROUND OF THE INVENTION

### Field of the Invention

The present invention relates to an installation method and an apparatus of a sensor based on strain gauge to generate deformation signals caused by an applied force, and more particularly to the installation method and apparatus of the sensor without generating feedback signals when the signal is used to control an auxiliary motor which propels power-assist type of vehicles such as electric bicycles.

### Description of the Related Art

Electric bicycle, in particular, pedelec is a bike having an electrical auxiliary motor, and the degree of assist is proportional to user's pedal force In other words, the greater the pedaling force, the greater the power of the auxiliary motor supplies. In a conventional way of measuring a pedaling force as disclosed in WO2001030643 A1, the magnitude of a deformation signal of a bike frame is used to measure the rider's effort (power). As disclosed in CN1806161 A, a tension difference measuring device is installed onto a chain for measuring a torque variation signal transmitted by the chain when a pedaling force is applied to a bike by a bicycle rider. As disclosed in WO-03/073057, the amount of curved deformation is measured when a user applies a pedaling force. As disclosed in U.S. Pat. No. 7,814,800B2 and U.S. Pub. No. 2011/0040500A1, a strain gauge sensor is installed at the position of a rear dropout of a bicycle for measuring a deformation signal of the rear dropout when a bicycle rider applies a pedaling force.

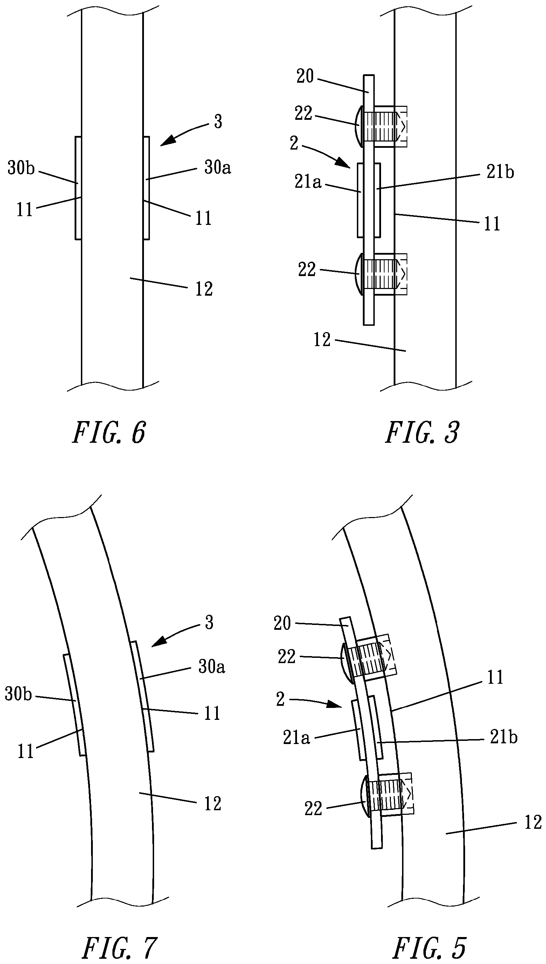

In U.S. Pat. No. 7,814,800 B2, a weakened rear fork (dropout 50 as shown in Fig. 3A) is installed as a rear dropout of a bike frame and provided for supporting an end of a hub. The rear fork has a precision-cut slot (55) formed in a vertical direction, so that the rear fork has a deformable area. An end of a measuring cell (70) is disposed in the deformable area, and the other opposite end of the measuring cell (70) is disposed at a position away from the deformable area of the rear fork, so that the measuring cell (70) can measure a deformation signal of the rear dropout when a bicycle rider applies a pedaling force. However, the application of U.S. Pat. No. 7,814,800B2 has the following drawbacks:
1. The weakened rear fork is an additional accessory which is needed to construct a complete bike, and its manufacturing not only requires an additional mold and a precision cutting, but also requires a modification of the frame for the fixation of the rear fork, and thus incurring a higher manufacturing cost. In addition, once the rear fork is removed, the bike cannot be ridden anymore.
2. The deforming direction of the rear fork is the same as the direction for the auxiliary motor that push the vehicle, so that feedbacks occur when the auxiliary motor drives the hub, which also generates deformation signal of the rear fork, so the auxiliary motor cannot provide accurate power as desired, if the deformation signal can be obtained at all (see 3 below). As a result, the riding process is un-intuitive and unnatural.
3. The measuring cell (70) is a strain gauge sensor that measures the stress by a change of resistance value of a metal conductive wire in the strain gauge sensor. When the strain gauge sensor is stretched, the conductive wire becomes narrower and longer, so that the resistance value increases. On the other hand, when the strain gauge sensor is compressed, the conductive wire becomes wider and shorter, so that the resistance value decreases. Therefore, the attached strain gauge sensor and the testing body must be treated as a whole, and the measuring direction must be parallel to the deforming direction of the testing body. In U.S. Pat. No. 7,814,800B2, the measuring cell (70) as shown in Fig. 3A, however, is in the vertical direction to the deforming direction of the rear fork (for a correct installation, the measuring cell (70) should, instead, be installed parallel to the weakened slot (55) as shown in Fig. 3A (for example, on the edge surface of leg 62). Even so, the signal feedback problem as mentioned in 2 above still cannot be avoided.

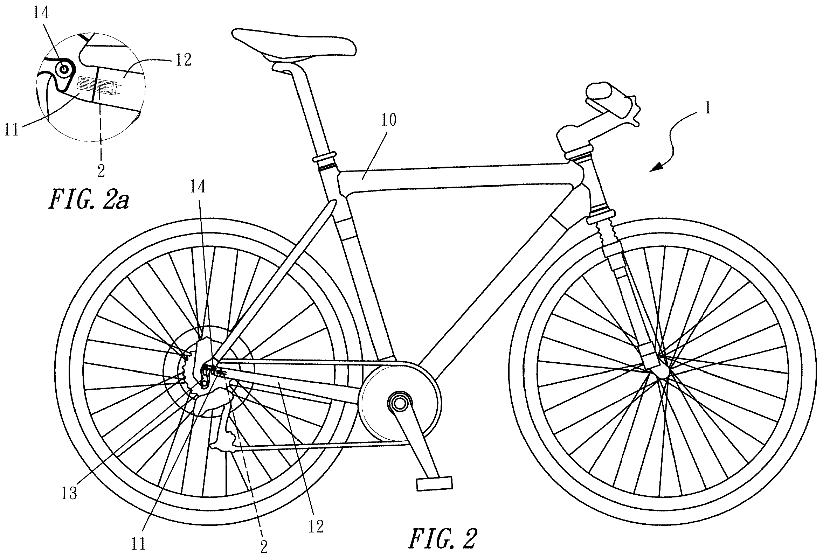

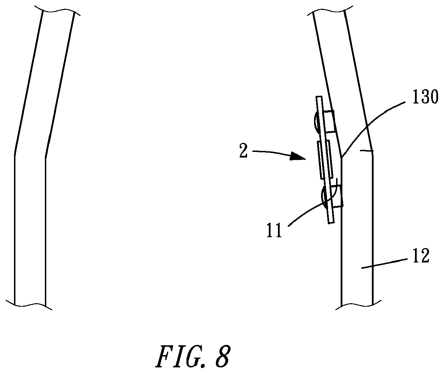

In U.S. Pub. No. 2011/0040500 A1, two strain gauge sensors 30a, 30b as shown in Fig. 8 are installed on two opposite inner sides of two rear dropouts respectively. This arrangement of paired strain gauge will be compressed or stretched in sync since the deformation of two dropouts where the axle of wheel is installed actually both stretched of compressed in the same time, and therefore the deformation signals detected by the two strain gauge sensors as disclosed in U.S. Pub. No. 2011/0040500 A1 will offset each other. In addition, when the installation location of the strain gauge sensor 30 as shown in Fig. 2 and Fig. 9 is situated exactly at where the hub is bolted to the bike frame. The strain gauge sensors 30 cannot avoid being interfered or even damaged.

CN 102190059 A discloses an installation method of a strain gauge sensor apparatus, and a combination of an electric bicycle and a strain gauge sensor apparatus, as defined in the preambles of independent claims 1 and 4, respectively.

JP 2000 272574 A discloses another bicycle strain gauge sensor apparatus.

### SUMMARY OF THE INVENTION

In view of the aforementioned drawbacks of the applications as disclosed in U.S. Pat. No. 7,814,800B2 and U.S. Pub. No. 2011/0040500 A1, the inventor of the present invention provides a solution to overcome the drawbacks of the prior art. Moreover, it provides a method that allows easy installation of the sensor without altering the basic design of the vehicle.

Therefore, it is a primary objective of the present invention to provide an installation method and apparatus of a strain gauge sensor capable of generating and measuring a deformation signal caused by an applied force. The present invention is applied to an electrical vehicle such as an e-bike having an auxiliary power and capable of obtaining applied force (or driving force) signal without receiving the feedback signals generated by the auxiliary motor, thereby supplying a correct auxiliary power to the electrical vehicle and makes the riding of the electrical vehicle intuitive and bionic.

To achieve the aforementioned objective, the present invention provides, as defined in independent claims 1 and 4, a strain gauge sensor apparatus installed to a defined location of the vehicle frame, and the chosen location, coupled with the installation method satisfies the following methods/requirements:
Method 1: when a manual pushing/pulling force is applied to the installation location of an electrical vehicle, the location of the frame is deformable and the degree of vehicle deformation is directly proportional to the applied pushing/pulling force;
Method 2: when the pushing/pulling force is applied, the direction of vehicle deformation of the chosen location is independent to the direction of applied force (for example, the direction of the force can be to-and-fro while that of the vehicle deformation can be left-and-right); and Method 3: the direction of strain gauge sensor apparatus is parallel to the direction of vehicle deformation at the installation location.

The strain gauge sensor apparatus of the present invention is installed onto a location of an electrical vehicle frame according to the aforementioned installation method, and the strain gauge sensor apparatus comprises a metal plate and two strain gauge sensors, and the two strain gauge sensors are attached onto both sides of the metal plate respectively, and two ends of the metal plate are secured onto a side surface of the installation location. With the aforementioned configuration, the magnitude of a rider's pedaling force produces a corresponding vehicle deformation at the installation location, causing changes in the resistance values of the two strain gauge sensors. With a common electrical circuitry, this changing resistance is converted to voltage signal and is processed with a microprocessor which controls the auxiliary motor to provide a directly proportional power.

The strain gauge sensor apparatus of the present invention is installed to an installation location according to the aforementioned installation method, and the strain gauge sensor apparatus comprises two strain gauge sensors attached onto two opposite left and right sides of the installation location respectively. With the aforementioned configuration, the magnitude of a rider's pedaling force produces a corresponding vehicle deformation at the installation location, causing changes in the resistance values of the two strain gauge sensors. With a common electrical circuitry, this changing resistance is converted to voltage signal and is processed with a microprocessor which controls the auxiliary motor to provide a directly proportional power.

### BRIEF DESCRIPTION OF THE DRAWINGS

Fig. 1 is a flow chart of an installation method of a preferred embodiment of the present invention;
Fig. 2 is a side view of a strain gauge sensor apparatus applied to an electrical bicycle of the present invention;
Fig. 2a is a partial blowup view of Fig. 2;
Fig. 3 is a planar view of a first type of strain gauge sensor apparatus installed onto a side surface of a chain stay of an electric bicycle of the present invention;
Fig. 4 is an exploded view of the first type of strain gauge sensor apparatus installed onto a side surface of a chain stay of an electric bicycle of the present invention;
Fig. 5 is a planar view showing the vehicle deformation of a chain stay, a metal plate and two strain gauge sensors as shown in Fig. 3 after a driving force is applied to the electrical bicycle;
Fig. 6 is a schematic view of a second type of strain gauge sensor apparatus comprising two strain gauge sensors installed to both side surfaces of a chain stay of an electric bicycle respectively in accordance with the present invention;
Fig. 7 is a schematic view showing the vehicle deformation of a chain stay and two strain gauge sensors as shown in Fig. 6 after a driving force is applied to an electrical bicycle; and
Fig. 8 is a reference view of the invention showing a strain gauge sensor apparatus installed at a location where a right chain stay of a bicycle bends towards a bottom bracket.

### DETAILED DESCRIPTION OF THE PREFERRED EMBODIMENTS

The technical characteristics, contents, advantages and effects of the present invention will be apparent with the detailed description of a preferred embodiment accompanied with related drawings as follows.

The present invention is applicable to an electrical vehicle such as an e-bike or a (not claimed) wheelchair with an auxiliary power. The electrical vehicle is driven by an auxiliary motor, so that the rider can ride the above-mentioned electrical vehicles with less effort.

In the present invention, a strain gauge sensor apparatus is installed at a location of the electrical vehicle frame to measure the degree of vehicle deformation which is proportional to the force applied. When a manual driving force (such as a pedaling force applied to a bicycle pedal) causes a vehicle deformation at the installation location of the electrical vehicle frame and the strain gauge sensor apparatus, that the strain gauge sensor apparatus detects a deformation signal, and the magnitude of the deformation signal is used to control an auxiliary motor to provide a power directly proportional to the amount of vehicle deformation. The larger the driving force, the larger the deformation signal, so the interference of feedback signals from the auxiliary motor will not occur. As a result, a precise assistive power is supplied by the auxiliary motor.

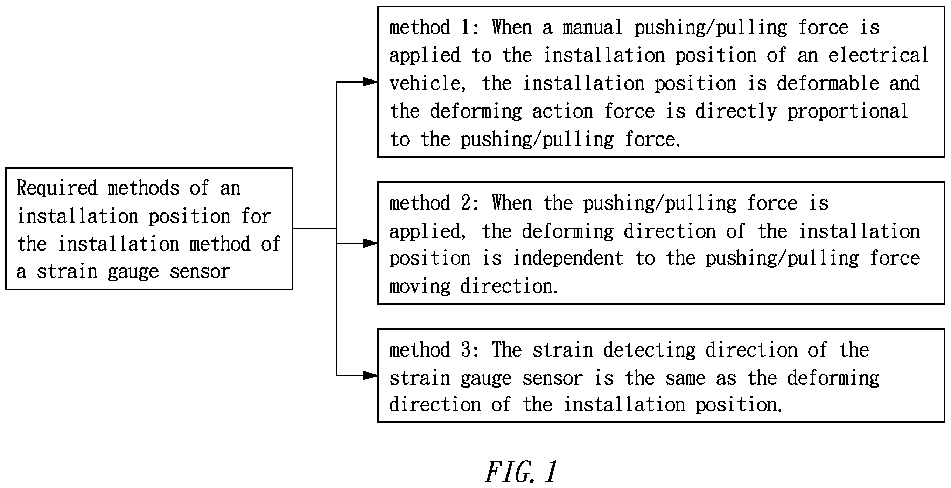

In Figs. 1, 2, and 2a, a strain gauge sensor apparatus 2 is installed at an installation location 11 of a frame 10 of an electrical vehicle 1 in accordance with the present invention. The installation location 11 configured (or selected) satisfies the following methods:
Method 1: When a manual pushing/pulling force (such as a pedaling force applied by a rider to a bicycle pedal, the pedaling force delivered to the hub, through a driving chain; or a driving force produced by pushing the hand-wheel of a not claimed wheelchair) is applied to the electrical vehicle 1, the strain gauge sensor apparatus 2 installed at the installation location 11 of the electrical vehicle 1 is also deformed, and the deforming action force is directly proportional to the pushing/pulling force.
Method 2: The direction of the vehicle deformation caused by an applied force at the installation location 11 is independent to the direction of applied pushing/pulling force. Thus the force generated by auxiliary motor will not be further detected by the sensor. The undesired feedback is a common problem when the direction of vehicle deformation by manual force is the same with that by the assistive force, generating an undesirable feedback signal caused by the torque of the auxiliary motor. With method 2 achieved by the current invention, the manual force is accurately obtained. As a result, the auxiliary motor supplies a correct assistive power.
Method 3: When the pushing/pulling force is manually applied to the installation location 11, the direction of vehicle deforming direction is the same as that of the strain gauge sensor apparatus 2. When the vehicle deforming direction at the installation location 11 and the strain detecting direction of the strain gauge sensor apparatus 2 are the same, the strain gauge sensor apparatus 2 measures the amount of vehicle deformation at the installation location 11 correctly as shown in Figs 5 and 7.

In the aforementioned Method 2, the vehicle deforming direction at the installation location 11 of the strain gauge sensor apparatus 2 is independent to the manual pushing/pulling force direction. In other words, the direction of vehicle deformation caused by the manual force at the installation location 11 is different from that of the applied force itself. And the degree of vehicle deformation measured by the sensor is directly proportional to the manual force applied. The installation location 11 is situated at a location between angles of positive and negative 30 degrees with respect to the parallel axis of the direction of applied manual force. The aforementioned installation location 11 refers to the position of a right chain stay 12 of a bicycle and within 10cm away from the rear hub 14 (as shown in Fig. 2a). The installation location 11 also refers to the position where the right dropout 13 being parallel to the left dropout joins the chain stay.

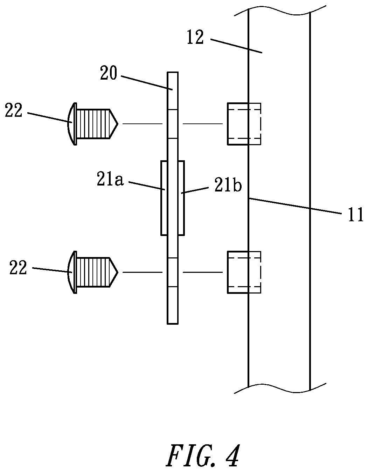

The strain gauge sensor apparatus of the present invention may be installed by the following two methods. 1. The strain gauge sensor apparatus 2 installed to the installation location 11 according to the aforementioned installation method as shown in Figs. 3-5 comprises an elastic metal plate 20 and two strain gauge sensors 21a, 21b attached onto corresponding surfaces on the both sides of the metal plate 20, and the two ends of the metal plate 20 are secured to a side surface of the installation location 11. The aforementioned installation location 11 is preferably situated on a side surface of the right chain stay 12 facing the rear hub. With the aforementioned configuration, the metal plate 20, the two strain gauge sensors 21a, 21b, and the right chain stay 12 are combined as a whole and deforms as a whole. In addition, the structure of this sort has several advantages: since both ends of the metal plate 20 of the sensor apparatus 2 may be secured to the installation location 11 of the frame 10 by the screw 22 after the frame 10 of the electrical vehicle 1 is painted and finished, without the need of fixing the two strain gauge sensors 21a, 21b to the installation location 11 prior to painting, thus making the manufacturing process smoother. It also provides an opportunity to repair or replace the sensor unit. When a rider applies a pushing/pulling force to the electrical vehicle 1 (such as an electric bicycle or a not claimed electric wheelchair), the installation location 11 of the frame 10 is deformed, causing the metal plate 20 to deform accordingly. The degree of vehicle deformation is measured via two strain gauge sensors 21 installed on both sides of the metal plate 20, generating signals to be used in controlling the auxiliary motor to supply a directly proportional power to the electrical vehicle 1. The installation location 11 of the strain gauge sensor apparatus 2 is positioned on the right chain stay before the dropout 13, where the chain stay bends towards the bottom bracket, with the strain gauge sensor apparatus 2 spans over the obtuse angle of the bend 130 as shown in Fig. 8.

The second type of strain gauge sensor apparatus 3 of the present invention is installed to an installation location 11 according to the aforementioned installation method, and this type of strain gauge sensor 3 also comprises two strain gauge sensors 30a, 30b as shown in Figs. 6 and 7. The two strain gauge sensors 30a, 30b are attached onto two corresponding left and right sides of the installation location 11, and the two strain gauge sensors 30a, 30b and the installation location 11 of the frame 10 are deformed as a whole. With the aforementioned configuration, when a rider applies a pushing/pulling force to the electrical vehicle 1, the installation location 11 of the frame is deformed, and the resistance values of the two strain gauge sensors 30a, 30b are accordingly changed, generating the deformation signal which is used to control the auxiliary motor to provide a directly proportional power to the electrical vehicle.

It is noteworthy that the vehicle deforming and displacing directions as disclosed in U.S. Pat. No. 7,814,800B2 are forward and backward directions, but the vehicle deforming and displacing directions of the present invention are left and right directions, and thus the two are different. U.S. Pat. No. 7,814,800B2 relies on a weakened dropout plate to measure the amount of vehicle deformation. However, the present invention does not require such additional dropout plate. The metal plate of the present invention is an additional, not part of, the bike frame, and is installed conveniently for measuring the vehicle deformation caused by the applied manual force only. Once if the rear fork as disclosed in U.S. Pat. No. 7,814,800B2 is removed, the electrical vehicle cannot be ridden anymore. On the other hand, a rider still can ride the electrical vehicle of the present invention in the same situation as a normal bike. It is obvious that the present invention improves over the prior art.

According to the installation method of the present invention, the strain gauge sensor apparatus is installed to the installation location of the vehicle frame, and the strain gauge sensor apparatus will not be affected by the driving force when the auxiliary motor is driven, and feedback information will not be produced when the auxiliary motor is rotated, so that the riding of the electrical vehicle achieves intuitive and bionic effect.

## Claims

1. An installation method for installing a strain gauge sensor apparatus (2, 3) at an installation location (11) on an electrical bicycle (1), the strain gauge sensor apparatus (2, 3) being capable of generating a deformation signal caused by a pushing/pulling force applied on the electrical bicycle (1), and the installation location (11) of the strain gauge sensor apparatus (2, 3) satisfying the following requirements:
Requirement 1: when a manual pushing/pulling force is applied to the installation location (11) of the electrical bicycle (1), the installation location (11) is deformable and the deforming action force is directly proportional to the pushing/pulling force;
Requirement 2: when the pushing/pulling force is applied, the bicycle deforming direction at the installation location (11) is independent of the pushing/pulling force moving direction;
Requirement 3: the strain detecting direction of the strain gauge sensor apparatus (2, 3) is in the same direction as the bicycle deforming direction at the installation location (11) ;
wherein the installation location (11) is situated at a position between angles of positive and negative 30 degrees with respect to the axis parallel to the pushing/pulling force moving direction ;
the installation method being **characterised by** installing the strain gauge sensor apparatus (2, 3) at the installation location (11) that is situated at a right chain stay (12) of the bicycle (1) proximate to a right dropout (13) and within 10cm away from a rear hub (14), and where the chain stay (12) bends towards a bottom bracket, with the strain gauge sensor apparatus (2, 3) spanning over an obtuse angle of the bend (130) of the chain stay (12).

2. The installation method according to claim 1, wherein the installation location (11) is situated at a position 5cm away from the rear hub (14).

3. The installation method according to claim 1, wherein the installation location (11) at the right chain stay (12) is situated on a side surface facing the rear hub end.

4. A combination of an electrical bicycle (1) and a strain gauge sensor apparatus (2) installed at an installation location (11) on the electrical bicycle (1), wherein the strain gauge sensor apparatus (2) comprises an elastic metal plate (20) and one strain gauge sensor (21a, 21b) attached onto one of the two opposite left and right sides of the metal plate (20), and wherein both ends of the metal plate (20) are secured onto a side surface of the installation location (11) of the strain gauge sensor apparatus (2), the installation location (11) being situated at a position between angles of positive and negative 30 degrees with respect to the axis parallel to a pushing/pulling force moving direction,
**characterised in that** the strain gauge sensor apparatus (2) further comprises another strain gauge sensor (21a, 21b) attached onto the other one of the two opposite left and right sides of the metal plate (20),
and **in that** the installation location (11) is situated at a right chain stay (12) of the bicycle (1) proximate to a right dropout (13) and within 10cm away from rear hub (14), and where the chain stay (12) bends towards a bottom bracket, with the strain gauge sensor apparatus (2) spanning over an obtuse angle of the bend (130) of the chain stay (12), the strain gauge sensor apparatus (2) being thus installed according to the installation method according to claim 1.

## Patentansprüche

1. Einbauverfahren zum Einbauen einer Dehnungsmessstreifen-Sensorvorrichtung (2, 3) an einem Einbauort (11) auf einem elektrischen Fahrrad (1), wobei die Dehnungsmessstreifen-Sensorvorrichtung (2, 3) zum Erzeugen eines Verformungssignals imstande ist, das durch eine Schub-/Zugkraft hervorgerufen wird, die auf das elektrische Fahrrad (1) angewendet wird, wobei der Einbaubauort (11) der Dehnungsmessstreifen-Sensorvorrichtung (2, 3) die folgenden Anforderungen erfüllt:
Anforderung 1: bei Anwendung einer manuellen Schub-/Zugkraft auf den Einbauort (11) des elektrischen Fahrrads (1) ist der Einbauort (11) verformbar, und die verformende Wirkkraft ist direkt proportional zur Schub-/Zugkraft;
Anforderung 2: bei Anwendung der Schub-/Zugkraft ist die Fahrradverformungsrichtung am Einbauort (11) unabhängig von der Bewegungsrichtung der Schub-/Zugkraft;
Anforderung 3: die Dehnungserkennungsrichtung der Dehnungsmessstreifen-Sensorvorrichtung (2, 3) ist in der gleichen Richtung wie die Fahrradverformungsrichtung am Einbauort (11);
wobei der Einbauort (11) sich in einer Position zwischen positiven und negativen Winkeln von 30 Grad in Bezug auf die Achse parallel zur Bewegungsrichtung der Schub-/Zugkraft befindet;
wobei das Einbauverfahren **gekennzeichnet ist durch** Einbauen der Dehnungsstreifen-Sensorvorrichtung (2, 3) am Einbauort (11), der sich an einer rechten Kettenstrebe (12) des Fahrrads (1) in der Nähe eines rechten Ausfallendes (13) und innerhalb von 10 cm Entfernung von einer Hinterradnabe (14) und dort befindet, wo die Kettenstrebe (12) sich in Richtung eines Tretlagers krümmt, wobei die Dehnungsstreifen-Sensorvorrichtung (2, 3) sich über einen stumpfen Winkel der Krümmung (130) der Kettenstrebe (12) erstreckt.

2. Einbauverfahren nach Anspruch 1, wobei der Einbauort (11) sich in einer Position in 5 cm Entfernung von der Hinterradnabe (14) befindet.

3. Einbauverfahren nach Anspruch 1, wobei der Einbauort (11) an der rechten Kettenstrebe (12) sich auf einer Seitenfläche befindet, die der Hinterradnabe zugewandt ist.

4. Kombination eines elektrischen Fahrrads (1) und einer Dehnungsstreifen-Sensorvorrichtung (2), die an einem Einbauort (11) auf dem elektrischen Fahrrad (1) installiert ist, wobei die Dehnungsstreifen-Sensorvorrichtung (2) eine elastische Metallplatte (20) und einen Dehnungsstreifen-Sensor (21a, 21b) umfasst, der auf einer der beiden gegenüberliegenden Seiten rechts und links von der Metallplatte (20) angebracht ist,
und wobei beide Enden der Metallplatte (20) an einer Seitenfläche des Einbauorts (11) der Dehnungsstreifen-Sensorvorrichtung (2) befestigt sind, wobei der Einbauort (11) sich in einer Position zwischen positiven und negativen Winkeln von 30 Grad in Bezug auf die Achse parallel zu einer Bewegungsrichtung einer Schub-/Zugkraft befindet,
**dadurch gekennzeichnet, dass** die Dehnungsstreifen-Sensorvorrichtung (2) ferner einen anderen Dehnungsstreifen-Sensor (21a, 21b) umfasst, der auf der anderen der beiden gegenüberliegenden Seiten rechts und links von der Metallplatte (20) angebracht ist,
und dadurch, dass der Einbauort (11) sich an einer rechten Kettenstrebe (12) des Fahrrads (1) in der Nähe eines rechten Ausfallendes (13) und innerhalb von 10 cm Entfernung von einer Hinterradnabe (14) und dort befindet, wo die Kettenstrebe (12) sich in Richtung eines Tretlagers krümmt, wobei die Dehnungsstreifen-Sensorvorrichtung (2) sich über einen stumpfen Winkel der Krümmung (130) der Kettenstrebe (12) erstreckt,
wodurch die Dehnungsstreifen-Sensorvorrichtung (2, 3) somit gemäß dem Einbauverfahren nach Anspruch 1 eingebaut ist.

## Revendications

1. Procédé d'installation pour installer un appareil à capteurs à jauge de contrainte (2, 3) à un emplacement d'installation (11) sur une bicyclette électrique (1), l'appareil à capteurs à jauge de contrainte (2, 3) étant capable de générer un signal de déformation causé par une force de poussée/traction appliquée sur la bicyclette électrique (1), l'emplacement d'installation (11) de l'appareil à capteurs à jauge de contrainte (2, 3) satisfaisant les exigences suivantes :
Exigence 1 : lorsqu'une force de poussée/traction manuelle est appliquée à l'emplacement d'installation (11) e la bicyclette électrique (1), l'emplacement d'installation (11) est déformable et la force d'action de déformation est directement proportionnelle à la force de poussée/traction ;
Exigence 2 : lorsque la force de poussée/traction est appliquée, la direction de déformation de bicyclette à l'emplacement d'installation (11) est indépendante de la direction de déplacement de la force de poussée/traction ;
Exigence 3 : la direction de détection de contrainte de l'appareil à capteurs à jauge de contrainte (2, 3) est dans la même direction que la direction de déformation de bicyclette à l'emplacement d'installation (11) ;
l'emplacement d'installation (11) étant situé dans une position entre des angles de 30 degrés positif et négatif par rapport à l'axe parallèle à la direction de déplacement de la force de poussée/traction ;
le procédé d'installation étant **caractérisé par** l'installation de l'appareil à capteurs à jauge de contrainte (2, 3) à l'emplacement d'installation (11) qui est situé au niveau d'une base droite (12) de la bicyclette (1) à proximité d'une patte arrière droite (13) et dans les limites de 10 cm d'un moyeu arrière (14), et la base (12) se courbant vers un boîtier de pédalier, avec l'appareil à capteurs à jauge de contrainte (2, 3) couvrant un angle obtus de la courbure (130) de la base (12).

2. Procédé d'installation selon la revendication 1, dans lequel l'emplacement d'installation (11) est situé dans une position à 5 cm du moyeu arrière (14).

3. Procédé d'installation selon la revendication 1, dans lequel l'emplacement d'installation (11) au niveau de la base droite (12) est situé sur une surface latérale faisant face à l'extrémité de moyeu arrière.

4. Combinaison d'une bicyclette électrique (1) et d'un appareil à capteurs à jauge de contrainte (2) installé à un emplacement d'installation (11) sur la bicyclette électrique (1), l'appareil à capteurs à jauge de contrainte (2) comprenant une plaque métallique élastique (20) et un capteur à jauge de contrainte (21a, 21b) fixé sur l'un des deux côtés gauche et droit opposés de la plaque métallique (20), et les deux extrémités de la plaque métallique (20) étant fixées sur une surface latérale de l'emplacement d'installation (11) de l'appareil à capteurs à jauge de contrainte (2), l'emplacement d'installation (11) étant situé dans une position entre des angles de 30 degrés positif et négatif par rapport à l'axe parallèle à une direction de déplacement de la force de poussée/traction,
**caractérisée par le fait que** l'appareil à capteurs à jauge de contrainte (2) comprend en outre un autre capteur à jauge de contrainte (21a, 21b) fixé sur l'autre des deux côtés gauche et droit opposés de la plaque métallique (20), et
**par le fait que** l'emplacement installation (11) est situé au niveau d'une base droite (12) de la bicyclette (1) à proximité d'une patte arrière droite (13) et dans les limites de 10 cm d'un moyeu arrière (14), et la base (12) se courbant vers un boîtier de pédalier, avec l'appareil à capteurs à jauge de contrainte (2) couvrant un angle obtus de la courbure (130) de la base (12),
l'appareil à capteurs à jauge de contrainte (2) étant ainsi installé selon le procédé d'installation selon la revendication 1.
